# EUROPÄISCHE PATENTSCHRIFT

(11) **EP 0 792 709 B1**
(45) Veröffentlichungstag und Bekanntmachung des Hinweises auf die Patenterteilung: **10.04.2002**
(21) Anmeldenummer: 96120130.8
(22) Anmeldetag: 14.12.1996
(51) Int. Cl.: B23C 3/34, B23C 5/12

(54) **Verfahren zum Herstellen von bogenförmigen Nuten und Werkzeug dazu**
Method to make curved grooves and tool therefor
Méthode à usiner des rainures courbées et outil destiné à cet usinage

(30) Priorität: 27.02.1996 DE 19607230
(43) Veröffentlichungstag der Anmeldung: 03.09.1997
(73) Patentinhaber: WALTER AG, 72072 Tübingen (DE)
(72) Erfinder: Deiss, Siegfried, 72810 Gomaringen (DE); Huber, Rolf, 72072 Tübingen (DE); Vollmer, Rolf, 72072 Tübingen (DE)
(74) Vertreter: Patentanwälte Rüger, Barthelt & Abel

(56) Entgegenhaltungen:
- FR-A- 2 270 045
- US-A- 5 176 500
- "Quelle Cloche" MACHINES PRODUCTION., Nr. 228, 18.April 1979, BOULOGNE/SEINE FR, Seite 9 XP002055786
- SCHULTE: 'Numerisch Gesteuertes Rotornut-Fräsen' VDI ZEITSCHRIFT Bd. 126, Nr. 5, M{rz 1984, DOSSELDORF DE, Seiten 128 - 131

## Beschreibung

Gegenstand der Erfindung sind ein Verfahren sowie eine Vorrichtung zum spanenden Ausbilden bzw. Bearbeiten von bogenförmigen Nuten, insbesondere von bogenförmigen Rotornuten, beispielsweise bei der Herstellung von Turbinenrotoren.

Solche Turbinenrotoren, wie sie beispielsweise für Dampfturbinen vorgesehen werden, weisen einen im wesentlichen zylindrischen Grundkörper auf, an dem mehrere scheibenförmige zylindrische Abschnitte ausgebildet sind. Diese sind an ihrem Umfang mit voneinander beabstandeten Nuten zur Aufnahme von Turbinenschaufeln versehen, deren Flanken in Nutenlängsrichtung gezahnt sind. Die Nuten weisen im Querschnitt deshalb ein sogenanntes Tannenbaumprofil auf, das der formschlüssigen Aufnahme und Sicherung eines Fußes einer Turbinenschaufel dient. Dabei sind sowohl in Längsrichtung verlaufende, gerade ausgebildete Nuten als auch Schrägnuten und kreisbogenförmige Nuten bekannt.

Ein Verfahren und eine Vorrichtung zur Ausbildung von in Seitenansicht kreisbogenförmigen Rotornuten ist aus dem Fachartikel: "Methoden und Maschinen zur Fräsbearbeitung von Generator- und Turbinenrotoren", Ing.(Grad.) Siegfried Neumann, Sonderdruck Nr. 9 der Köllmann Maschinenbau GmbH, 5602 Langenberg/Rhld., bekannt. Die Ausbildung der Kreisbogen-Nuten Erfolge ausgehend von einem Rohling mit scheibenförmigen Zylinderabschnitten. Der Herstellung der Nuten dient eine Fräsmaschine. Diese weist eine Werkzeugspindel auf, die axial verstellbar gelagert ist. Die Axialrichtung der Werkzeugspindel stimmt dabei im wesentlichen mit einer Radialrichtung des Werkstückes überein bzw. ist zu dieser parallel. An der Werkzeugspindel ist ein sogenannter Glockenfräser befestigt, dessen Werkzeuggrundkörper die Form einer kreisförmigen Platte mit axial vorstehendem Rand hat. Die im Längsschnitt betrachtete Kontur des Randes wird durch Schneidkanten tragende Schneidelemente definiert. Diese bestimmen mit ihrer Umlauffigur die Kontur der in einem Schruppfräsvorgang auszuhebenden und zunächst grob vorgeformten Nut. Das Profil ist aus mehreren Rechtecken zusammengesetzt und verjüngt sich zum Rand des Glockenfräsers hin in Stufen. Es ist hinterschneidungsfrei und dient lediglich dazu, eine grob vorkonturierte Nut zu öffnen (schruppen).

Zur Formgebung und Fertigbearbeitung der Nut ist ein Rundfräsapparat vorgesehen, der einen Profil-Schaftfräser im Vorschub auf einer Kreisbogenbahn längs der Nut führt. Der Schaftfräser weist ein Profil auf, das der Form der zu erzeugenden Nutflanke entspricht. Bezüglich der Radialrichtung des Werkstückes (Turbinenrotors) weist der Profil-Schaftfräser Hinterschneidungen auf.

Aufgrund der großen zur Ausbildung der Hinterschneidungen erforderlichen Profiltiefe und des langen, mit der Nutlänge übereinstimmenden Fräsweges erfordert die Fräsbearbeitung mit dem Schaftfräser eine lange Bearbeitungszeit. Diese summiert sich bei einer größeren Anzahl von entlang des Umfanges des Turbinenrotors verteilten Nuten zu einer erheblichen Gesamtbearbeitungszeit, die im Einzelbeispiel deutlich mehr als 5 Stunden allein für die Nuten an einem Kreisumfang betragen kann. Die hohe erforderliche Maschinenzeit bringt hohe Produktionskosten bei der Herstellung von Turbinenrotoren mit sich.

Davon ausgehend ist es Aufgabe der Erfindung, ein Verfahren und eine Vorrichtung zur Ausbildung profilierter, bogenförmiger Nuten anzugeben, das eine verkürzte Bearbeitungszeit ermöglicht.

Diese Aufgabe wird durch einen Glockensenker mit den Merkmalen des Patentanspruches 1 sowie mit einem Verfahren zur Ausbildung bogenförmiger, hinterschnittener Nuten gemäß Anspruch 15 gelöst.

Der Glockensenker nach Anspruch 1 weist einen ringförmigen Trägerabschnitt auf, an dessen Plattensitzen Wendeschneidplatten gehalten sind. Der mit Wendeschneidplatten bestückte Trägerabschnitt ist dabei von seinen Abmessungen her derart festgelegt, daß er in eine vorgeschruppte, d.h. geöffnete hinterschneidungsfreie Nut eingeführt werden kann, ohne daß die Wendeschneidplatten mit dem Werkstück in Berührung kommen. In einer kurzen radialen Zustellbewegung, deren Weite im wesentlichen der Tiefe der auszubildenden Hinterschneidungen entspricht, sind alle Hinterschneidungen zeitgleich und in kürzester Zeit ausbildbar. Der Glockensenker ermöglicht somit eine gegenüber einer Fräsbearbeitung mit herkömmlichen Formfräsern drastisch verkürzte Bearbeitungszeit. Während der herkömmliche Formfräser (Schaftfräser) die gesamte Profiltiefe in einer Vorschubbewegung ausfräsen muß, die der Länge der Nut entspricht, kann der Glockensenker die gleiche Materialmenge in einer kurzen, seitlichen Zustellbewegung abtragen. Jede Schneide des Glockensenkers wird bei jeder Werkzeugumdrehung über die gesamte Länge der Nutflanke geführt. Die Zerspanungsleistung ist dabei hoch.

Die Zustellbewegung ist eine geradlinige Seitenverschiebung des Glockensenkers. Diese kann auf einfache Weise erzielt werden. Die Einprogrammierung eines gekrümmten Zustellweges, wie es bei dem Stand der Technik erforderlich war, entfällt bei diesem Bearbeitungsschritt.

Die Schneiden des Glockensenkers sind stückweise auf die Wendeschneidplatten aufgeteilt, deren gegenseitige Überlappung die zu fräsende Kontur bestimmt. Aufgrund des entlang des Umfanges des Trägerabschnittes des Werkzeuggrundkörpers ausreichend vorhandenen Platzes zur Anordnung von Wendeschneidplatten, ist es möglich, mit dem wendeschneidplattenbestückten Glockensenker auch relativ enge Nuten auszufräsen. Die Wendeschneidplatten sind bei Bedarf wechselbar oder in anderer Position weiter verwendbar, so daß die Werkzeugkosten günstig beeinflußt werden. Im Vergleich dazu kann ein als Schaftfräser ausgebildeter Formfräser wegen der beengten Platzverhältnisse an seinem Umfang bei den für Rotornuten üblichen Nutabmessungen in der Regel nicht mit Wendeschneidplatten bestückt werden. Es werden deshalb profilierte HSS-Fräser (Hochleistungs-Schnellstahl) verwendet, die im Verschleißfalle insgesamt nachgeschliffen werden müssen. Bei der Verwendung erfindungsgemäßer Glockensenker hingegen sind HSS-Fräser allenfalls zur Fertigbearbeitung der mit Hinterschneidungen vorgefrästen Nut erforderlich.

Der ringförmige Trägerabschnitt kann durch eine Folge von Ausnehmungen unterbrochen sein, die dazu dienen, anfallende Späne aufzunehmen und aus der Nut herauszuführen. Die zwischen den Ausnehmungen verbleibenden, axial vorstehenden Teile des ringförmigen Trägerabschnittes bilden Stollen, die entsprechend der auszuarbeitenden Nut profiliert sind und Plattensitze zur Aufnahme von Wendeschneidplatten tragen. Die Stollen werden beim Vorschub des Glockensenkers vorwiegend in Umfangsrichtung und in geringerem Maße auch in Radialrichtung beansprucht. Die Bemessung trägt dem Rechnung, indem die Stollen in Radialrichtung weniger dick sind als in Umfangsrichtung. Zur Aussteifung des Trägerabschnittes können die in ihrer Größe im wesentlichen mit den Stollen übereinstimmenden Ausnehmungen so geformt sein, daß zwischen einzelnen Stollen ein die Stollen miteinander verbindender Steg vorhanden bleibt.

Es ist vorteilhaft, wenn die Befestigungsmittel zur Halterung der Wendeschneidplatten lösbare Befestigungsmittel sind, die bei tangential angeordneten Wendeschneidplatten freiflächenseitig zugänglich sind. Dies ist eine Zugangsrichtung, die quer zu dem Umfang liegt und mit der Axialrichtung einen spitzen Winkel einschließt. Der Platztausch und das Auswechseln von Wendeschneidplatten ist hier besonders einfach möglich.

Zur Ausbildung einer üblicherweise bezüglich einer Längsmittelebene symmetrisch geformten Nut sind vorzugsweise zwei zusammengehörige Glockensenker vorgesehen, deren einer die Wendeschneidplatten an der Innenumfangsseite des ringförmigen Trägerabschnittes trägt und deren anderer entsprechend an der Außenumfangsseite des ringförmigen Trägerabschnittes mit Wendeschneidplatten versehen ist. Obwohl der Glockensenker prinzipiell auch beidseitig, d.h. sowohl an seiner Innen- als auch an seiner Außenseite, Wendeschneidplatten tragen könnte, wird mit der Aufteilung auf zwei einen zusammengehörigen Satz bildende Glockensenker erreicht, daß der ringförmige Trägerabschnitt (Stollen) ausreichend dick gehalten werden kann. Dies ist insbesondere bei der Bearbeitung von engen Nuten von Bedeutung. Die radiale Dicke des Stollens ist geringer als die um die Profiltiefe verminderte Nutbreite.

Die an dem Glockensenker angeordneten Wendeschneidplatten sind gruppenweise entlang der Stollen angeordnet. Diese Reihen liegen damit quer zu der Umlaufrichtung und im wesentlichen parallel bzw. im spitzen Winkel zu der Axialrichtung des Werkzeuges. Jeder Stollen trägt vorzugsweise wenige (eine bis vier) Wendeschneidplatten pro Reihe. Die an einem einzelnen Stollen angreifenden Kräfte werden dadurch in Grenzen gehalten.

Die in den Unteransprüchen angegebene Ausrichtung der Schneidkanten der Wendeschneidplatten einer Reihe führt zu einer Kräftekompensation bezüglich der in axialer Richtung wirkenden Komponenten der Schnittkräfte. Diese wenigstens teilweise Kompensation von Komponenten der Schnittkräfte führt dazu, daß sich diese innerhalb eines Stollens ausgleichen und nicht über das Werkzeug bzw. die Werkzeugspindel abgeleitet werden müssen. Das kommt der Bearbeitungsgenauigkeit zugute.

Die zu einer vollständigen Schneide gehörigen Wendeschneidplatten sind vorzugsweise auf mehrere Stollen aufgeteilt, so daß insgesamt beispielsweise nur noch zwei vollständige Schneiden ausgebildet sind. Dennoch wird eine hohe Bearbeitungsgeschwindigkeit erreicht, weil pro Umdrehung des Glockensenkers zwei vollständige Schneiden über die gesamte Länge der Nut spanabhebend geführt werden. Die Zustellbewegung umfaßt lediglich wenige Millimeter. Zur Ausarbeitung des Nutprofils wird deshalb eine Taktzeit benötigt, die deutlich geringer als eine Minute ist. Gegenüber der mehr als 5-stündigen Bearbeitung von beispielsweise 50 am Umfang eines Turbinenrotors verteilten bogenförmigen Nuten ist es möglich, die Bearbeitungszeit insgesamt auf weniger als eine halbe Stunde zu reduzieren. Bei Versuchen konnten Bearbeitungszeiteinsparungen von deutlich über 90% erzielt werden.

Weitere auf das Verfahren bezogene Ansprüche erbringen die im wesentlichen im Zusammenhang mit dem Glokkensenker obenstehend diskutierten Vorteile.

In der Zeichnung sind Ausführungsbeispiele der Erfindung dargestellt. Es zeigen:
- Fig. 1: einen Turbinenrotor mit daran auszubildenden bogenförmigen Nuten in einer schematisierten Seitenansicht,
- Fig. 2: eine Fräsbearbeitungseinheit mit Glockensenker zur Profilierung einer zuvor geöffneten bogenförmigen Nut, in einer stark schematisierten Ansicht auf die Stirnseite des Rotors (Vorderansicht),
- Fig. 3: den Glockensenker nach Fig. 2 in einer perspektivischen Übersichtsdarstellung,
- Fig. 4: den Glockensenker nach Fig. 3 in einer schematisierten, ausschnittsweisen Längsschnittdarstellung mit einer schematisierten Projektion aller zu einer Schneide gehörigen Wendeschneidplatten, in eine die Axiale und die Radiale einschließenden Ebene, in schematisierter Darstellung,
- Fig. 5: einen in seiner Außenumfangsfläche profilierten Glockensenker, in schematisierter Längsschnittdarstellung mit einer Projektion aller zu einer Schneide gehörigen Wendeschneidplatten in die Zeichenebene,
- Fig. 6a bis 6e: den Glockensenker nach Fig. 5, in einer vereinfachten ausschnittsweisen Schnittdarstellung eines Wendeschneidplatten tragenden Stollens,
- Fig. 7: die Einstellung zweier zusammenwirkender, eine Längsausnehmung in die Nutwand fräsender Wendeschneidplatten des Glockensenkers nach Fig. 3 bezüglich des Sollmaßes, in schematisierter Darstellung,
- Fig. 8a und 8b: das Öffnen einer Nut mit Grobkontur durch Axialvorschub eines entsprechend ausgebildeten hinterschneidungsfreien Glockenfräser in einem ersten Arbeitsschritt, in schematisierter Darstellung,
- Fig. 9a und 9b: die Ausbildung der gewünschten Profilierung einer der beiden Nutflanken mit einem Glokkensenker nach Fig. 5, in einem zweiten Arbeitsschritt, in schematisierter Darstellung,
- Fig. 10a und 10b: die Ausbildung der Profilierung der gegenüberliegenden Nutflanke mit einem Glockensenker nach Fig. 4, in schematisierter Darstellung,
- Fig. 11: eine alternative Ausführungsform eines an seiner Außenseite profilierten Glockensenkers, mit Projektion seiner zu einer vollständigen Schneide gehörigen Wendeschneidplatten in die Zeichenebene, in schematisierter Darstellung und
- Fig. 12: die Einstellung der Schneidkanten der Wendeschneidplatten des Glockensenkers nach Fig. 11, in Bezug auf das auszubildende Nutprofil.

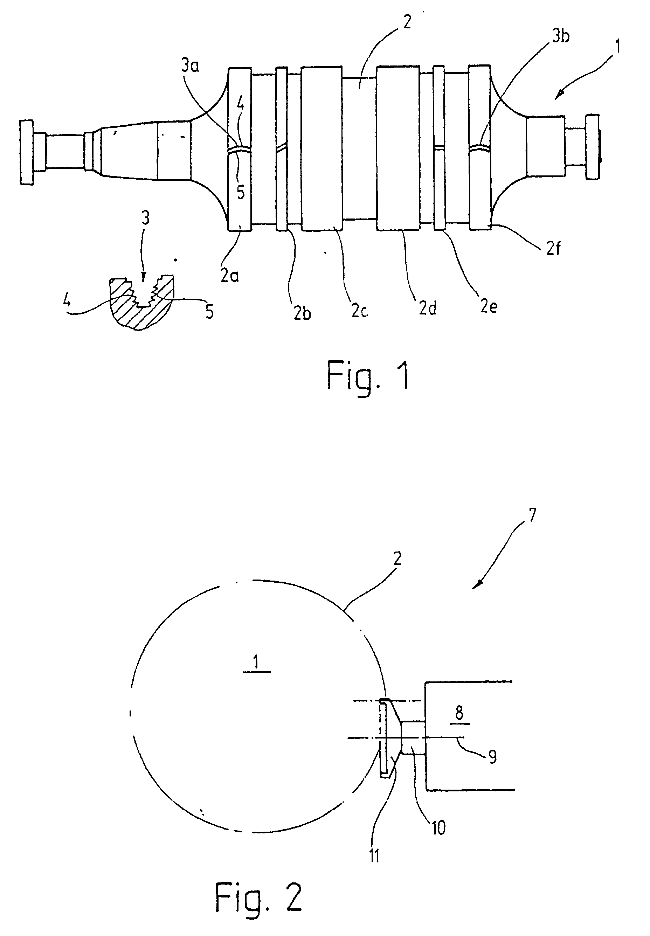

In Fig. 1 ist ein Turbinenrotor 1 schematisch veranschaulicht, der mehrere in Axialrichtung voneinander beabstandete scheibenförmige Abschnitte 2a bis 2f aufweist. Während die Abschnitte 2b bis 2e gerade ausgebildete Nuten aufweisen, sind die Abschnitte 2a und 2f mit kreisbogenförmig gekrümmten Nuten 3a, 3b versehen. Die Nuten 3a, 3b weisen im Querschnitt ein in Fig. 1 unten gesondert schematisch angedeutetes Tannenbaumprofil auf und dienen der Halterung und Befestigung von Turbinenschaufeln. Die Nut 3 (3a, 3b) weist an ihren einander gegenüberliegenden Flanken 4, 5 längsverlaufende Stege auf, zwischen denen Ausnehmungen definiert sind.

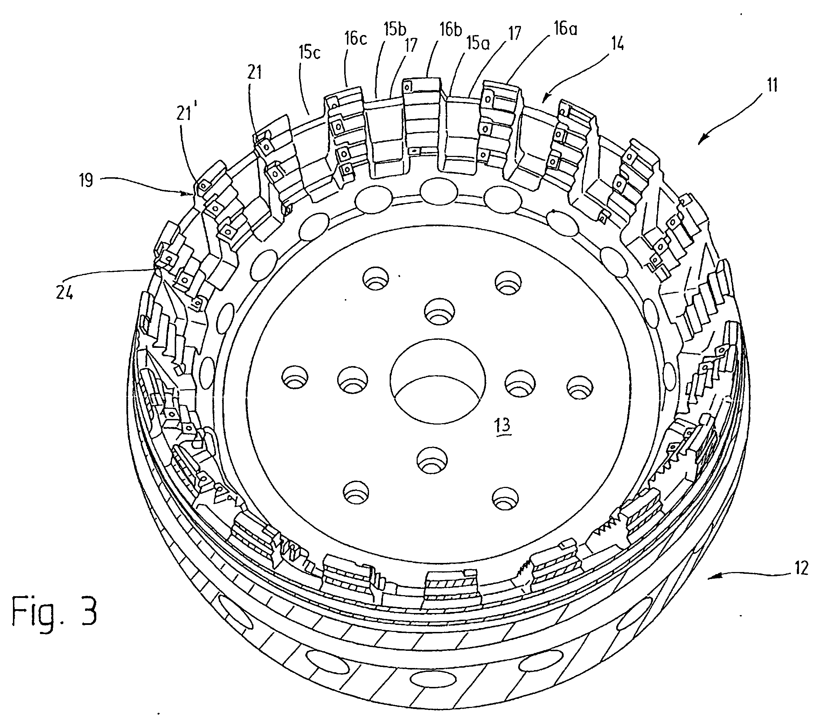

Zur Ausbildung der in Fig. 1 veranschaulichten profilierten Nuten 3, zunächst mit einem einheitlichen Untermaß in Bezug auf das gewünschte Sollmaß, an den Flanken 4, 5 dient eine in Fig. 2 schematisch veranschaulichte Fräsmaschine 7 mit einem axial, d.h. auf den Turbinenrotor 1 zu und von diesem weg, bewegbaren Spindelstock 8. Dieser trägt an seiner vorzugsweise waagerecht liegenden, um eine Drehachse 9 drehbaren Frässpindel 10 einen Glockensenker 11, wie er in Fig. 3 gesondert dargestellt ist.

Der Glockensenker 11 weist einen etwa topfförmigen Werkzeugkörper 12 mit einem im wesentlichen ebenen Boden 13 auf, von dem sich ein als ringförmiger Trägerabschnitt 14 ausgebildeter Rand in Axialrichtung weg erstreckt, der koaxial zu der Drehachse 9 angeordnet ist.

In dem Trägerabschnitt 14 sind sich radial nach innen, außen und axial von dem Boden 13 weg öffnende Ausnehmungen 15 (15a, 15b, 15c...) in Umfangsrichtung voneinander beabstandet ausgebildet, so daß zwischen den Ausnehmungen 15 untereinander gleich große, sich von dem Boden 13 in Axialrichtung weg erstreckende Stollen 16 (16a, 16b, 16c,...) ausgebildet sind. Dabei sind benachbarte Stollen jeweils über einen Steg 17 miteinander verbunden, der die jeweilige Ausnehmung 15 radial nach außen hin wenigstens teilweise abdeckt. Die Höhe der Stege 17 in Axialrichtung ist geringer als die Höhe der untereinander gleich großen Stollen 16.

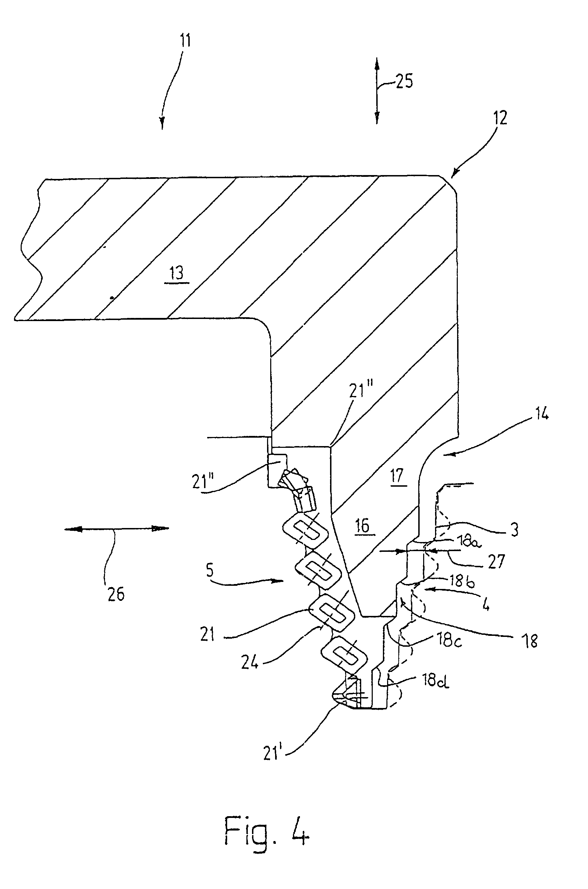

Während die Stollen an ihrer radial außen liegenden Seite in Axialrichtung hinterschneidungsfrei gestuft ausgebildet sind, sind sie an ihrer jeweiligen radial innen liegenden Seite, dem in Fig. 1 dargestellten Flankenprofil der Nut 3 entsprechend, profiliert. Die außen liegende Seite weist Stufen 18 auf, die zu ihrer Unterscheidung in Fig. 4 Buchstabenindizes a bis d tragen. Die Stufen werden jeweils durch eine axiale, die Umfangsfläche eines Zylinders beschreibende Fläche und eine Schrägschulter gebildet, die auf einem Kegelmantel liegt. Die Stufen 18 sind so ausgebildet, daß der Glockensenker außermittig in eine hinterschneidungsfrei geöffnete Nut axial eingefahren werden kann, ohne die Flanke 4 der Nut 3 zu berühren.

Die Stollen 16 sind an ihrer profilierten (Innen-) Seite mit Plattensitzen 19 versehen, an denen Wendeschneidplatten 21 gehalten sind. Die Innenseite weist der Anzahl der zu erzeugenden Hinterschneidungen (fünf) entsprechende, einzeln axial nach innen vorstehende und sich in Umfangsrichtung erstreckende Rippen 20 (20a bis 20e) auf. Die Plattensitze 19 sind an den Rippen 20 vorgesehen, wobei auf alle in Umfangsrichtung hintereinander liegende Rippen 20 einer Schneide zwei Plattensitze entfallen. Eine Schneide ist dabei durch eine Gruppe von Wendeschneidplatten definiert, deren Schneidkanten in Umfangsrichtung übereinanderprojiziert die Kontur der Nutflanke vollständig bestimmen.

Die Wendeschneidplatten sind in der Regel quaderförmig, d.h. in Draufsicht viereckig, ausgebildet, wobei endständige Wendeschneidplatten 21' von dieser Form abweichend ausgebildet sein können. Die Wendeschneidplatten 21, 21' sind tangential angeordnet, d.h. sie sitzen auf Plattensitzen 19, deren Anlageflächen im wesentlichen in Umfangsrichtung liegen. Befestigungsschrauben 24 durchgreifen die Wendeschneidplatten 21 bei deren Zentralöffnungen und sind in in den Plattensitzen 19 ausgebildete Gewindebohrungen eingeschraubt.

Der in Fig. 3 dargestellte Glockensenker 11 weist insgesamt vier Schneiden auf, die jeweils auf fünf Stollen 16 aufgeteilt sind. Dies bedeutet, daß die Wendeschneidplatten 21 einer ersten Stollengruppe 16 mit ihren jeweils aktiven Schneidkanten die gewünschte Kontur der Flanke 5 vollständig definieren. Dabei ist an jeder Wendeschneidplatte 21 lediglich eine Schneidkante aktiv. Der Glockensenker 11 mit vier vollständigen Schneiden weist vier solcher Stollengruppen auf. Bedarfsweise ist es auch möglich, die Anzahl der Schneiden größer oder kleiner festzulegen.

Zur Veranschaulichung der Position der einzelnen zu einer Schneide gehörigen Wendeschneidplatten 21 sind diese in Fig. 4 entlang des Umfanges in die Zeichenebene projiziert dargestellt. Dabei ist ersichtlich, daß die vollständige von den Wendeschneidplatten 21 definierte Schneide insgesamt 5 Hinterschneidungen bezüglich der durch einen Pfeil 25 angedeuteten Axialrichtung definiert. Die zur Ausbildung der Hinterschneidungen an der Flanke 5 der Nut 3 vorgesehenen Wendeschneidplatten sind bis auf die endständige Wendeschneidplatte im wesentlichen quaderförmig ausgebildet, wobei die entsprechenden Plattensitze 19 in Umfangsrichtung liegend gegen die Radiale (Pfeil 26) einheitlich geneigt sind. Entsprechend sind die Befestigungsschrauben 24 von der Innenseite des Werkzeugkörpers 12 her zugänglich.

Die endständige Wendeschneidplatte 21' weist einen näherungsweise dreieckigen Querschnitt auf. Zusätzlich sind innenliegende Wendeschneidplatten 21" vorgesehen, die der Bearbeitung des Randes der Nut 3 dienen.

Während die Kontur des Glockensenkers 11 an seiner Innenseite von den Wendeschneidplatten 21, 21', 21" definiert ist, wird sie an der Außenumfangsfläche durch die Außenseiten der Stollen 16 definiert. Das Profil des Glockensenkers 11 ist hier hinterschneidungsfrei. Der von den Stollen 16 gebildete ringförmige Trägerabschnitt 14 verjüngt sich über die Länge der Stollen 16 in Axialrichtung (Pfeil 25) stufenförmig. Die Stufen sind dabei so bemessen, daß der Glockensenker 11 mit seinen Wendeschneidplatten bestückten Stollen 16 in die vorgefertigte in Fig. 4, gestrichelt veranschaulichte Nut 3 einfahrbar ist, ohne die Flanken 4, 5 der Nut 3 zu berühren. Dabei ist eine zusätzliche Maßzugabe bezüglich des Abstandes 27 zwischen der an der zugeordneten Flanke 5 anliegenden Schneide sowie der Außenumfangsfläche der Stollen 16 und der Nutflanke 3 erforderlich. Dieser zusätzliche Freiraum ermöglicht ein Eintauchen der Stollen 16 in Axialrichtung (Pfeil 25) in die Nut 3 ohne Flankenberührung.

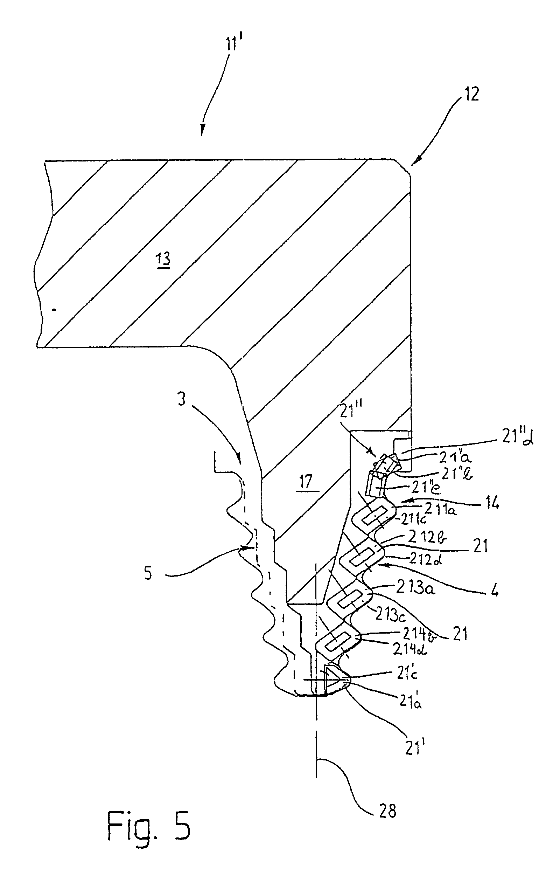

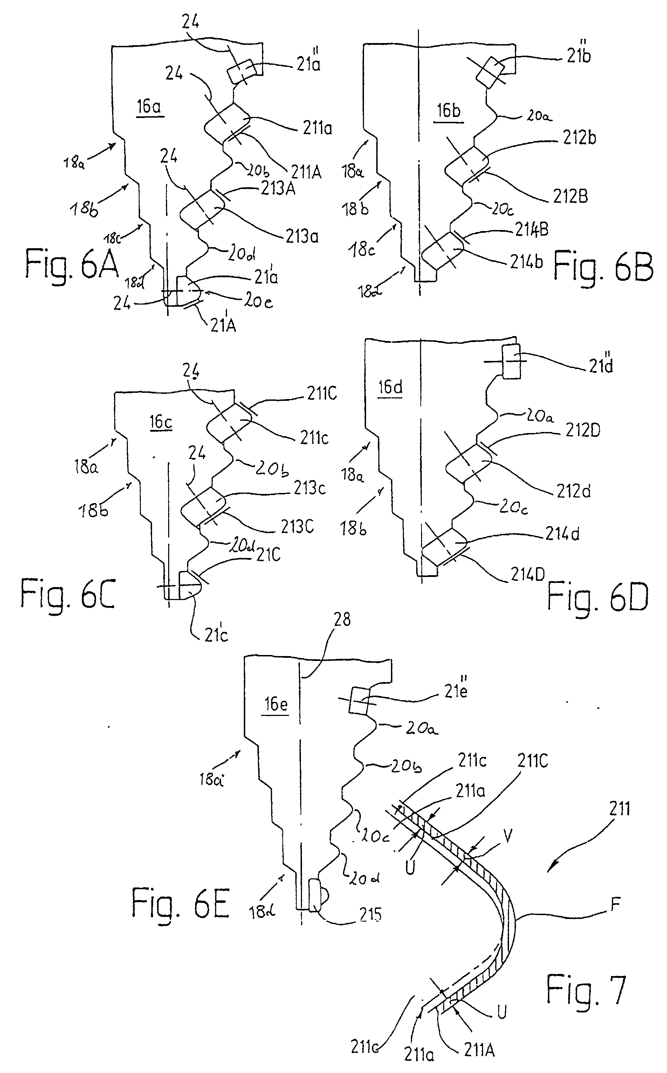

Ein komplementärer, an seiner Außenseite mit Wendeschneidplatten 21, 21', 21" bestückter Glockensenker 11' ist in Fig. 5 dargestellt. Sein Trägerabschnitt 14 ist symmetrisch zu einer in Fig. 5 durch eine Strich-Punkt-Linie bezeichnete, kreisbogenförmig gekrümmte Längsmittelebene 28 der Nut 3 ausgebildet. Hinsichtlich der Ausbildung und Anordnung der Wendeschneidplatten 21, 21', 21" sowie der Plattensitze 19 gilt die zu dem Glockensenker 11 (Fig. 4) gegebene Beschreibung entsprechend. Gleichermaßen gilt die folgende, sich auf die Figuren 6a bis 6e sowie die Figur 7 stützende Beschreibung der Anordnung der Wendeschneidplatten 21, 21', 21" des Glokkensenkers 11' entsprechend für den Glockensenker 11 mit seinen an der Innenseite angeordneten Wendeschneidplatten 21, 21', 21".

Wie Fig. 6 zeigt, sind die zu einer vollständigen Schneide gehörigen Wendeschneidplatten 21, 21', 21" auf insgesamt 5 Stollen 16a, 16b, 16c, 16d, 16e aufgeteilt. Diese Stollen 16a bis 16e sind in Umfangsrichtung aufeinander folgende Stollen des Trägerabschnittes 14. Der Stollen 16a trägt insgesamt vier Schneidplatten. Dies sind eine quaderförmige Wendeschneidplatte 21"a zur Bearbeitung des Nutrandes, eine erste Wendeschneidplatte 211a zur Ausbildung bzw. Bearbeitung einer dem Nutrand am nächsten liegenden Hinterschneidung, eine Wendeschneidplatte 213a zur Ausbildung der übernächsten Hinterschneidung der Flanke 4 und eine im Querschnitt im wesentlichen dreieckige Wendeschneidplatte 21'a zur Ausbildung der dem Nutboden am nächsten liegenden Hinterschneidung.

Der Abstand zwischen der Wendeschneidplatte 211a und der Wendeschneidplatte 213a stimmt im wesentlichen mit dem Abstand zwischen der Wendeschneidplatte 213a und der Wendeschneidplatte 21'a überein. Zwischen den genannten Schneidplatten ist jeweils eine Plattenposition frei, bei der weder Plattensitze noch Schneidplatten angeordnet sind.

Der in Drehrichtung folgende Stollen 16b ist in Fig. 6b veranschaulicht. Er trägt eine quaderförmige Wendeschneidplatte 21"b zur Bearbeitung des Nutrandes sowie zwei weitere Wendeschneidplatten 212b, 214b zur Bearbeitung der, vom Nutrand gesehen, zweiten und vierten Hinterschneidung. Wiederum ist zwischen den einzelnen Schneidplatten jeweils eine Plattenposition freigelassen und die Abstände zwischen den Schneidplatten sind untereinander im wesentlichen gleich.

Darüber hinaus ist ersichtlich, daß die Wendeschneidplatten 212b, 214b mit den Wendeschneidplatten 211a, 213a, 21'a des vorauseilenden Stollens 16a auf Lücke stehen.

Dies gilt auch im Verhältnis zu dem nachfolgenden Stollen 16c, der Wendeschneidplatten 211c, 213c, 21'c zur Bearbeitung der, vom Nutrand gesehen, ersten, dritten und fünften Nut trägt. Die Abstände zwischen benachbarten Schneidplatten sind auch an diesem Stollen 16c wie bei dem nachfolgenden Stollen 16d (Fig. 6d) einheitlich festgelegt. Der Stollen 16d weist drei Wendeschneidplatten 21"d, 212d und 214d auf. Während die Wendeschneidplatte 21"d der Bearbeitung des Nutrandes dient, sind die Wendeschneidplatten 212d, 214d zur Bearbeitung der zweiten und vierten Hinterschneidung vorgesehen und stehen mit den Wendeschneidplatten 211c, 213c, 21'c des vorauseilenden Stollens 16c auf Lücke.

Dies gilt prinzipiell auch für den nachfolgenden Stollen 16e, der lediglich eine Wendeschneidplatte 21"e zur Bearbeitung des Nutrandes im Übergang zu der ersten Ausnehmung und endständig eine im wesentlichen flach ausgebildete Wendeschneidplatte 215 zur Bearbeitung des Nutbodens trägt.

Hinsichtlich der auszubildenden Hinterschneidungen bearbeiten der erste und der dritte Stollen 16a, 16c die erste, dritte und fünfte Hinterschneidung, während der zweite und der vierte Stollen 16b, 16d die zweite und vierte Hinterschneidung bearbeiten. Dabei wird jede Hinterschneidung von zwei einander überlappenden Schneidplatten ausgebildet. Die vorauseilende Wendeschneidplatte 211a ist dabei mit ihrer zum Nutboden hin liegenden Schneidkante 211A aktiv, während die zugeordnete nacheilende Wendeschneidplatte 211c mit ihrer von dem Nutboden weg weisenden Schneidkante 211C aktiv ist.

Die Verhältnisse sind bei den Wendeschneidplatten 213a, 213c für die dritte Hinterschneidung gerade umgekehrt. Die Wendeschneidplatte 213a ist mit ihrer von dem Nutboden weg liegenden Schneidkante 213A aktiv, während die Wendeschneidplatte 213c mit ihrer zum Nutboden hin liegenden Schneidkante 213C aktiv ist. Schließlich schneidet die Wendeschneidplatte 21'a mit ihrer bodenseitigen Schneidkante 21'A, während die Wendeschneidplatte 21'c mit ihrer von dem Nutboden weg weisenden Schneidkante 21'C aktiv ist. Dies wird bei allen drei genannten Platten 211, 213, 21' durch einen geringfügigen Axialversatz der jeweiligen Schneidplatten gegeneinander erreicht, wie in Fig. 7 anhand der Wendeschneidplatten 211a, 211c (Plattenpaar 211) veranschaulicht ist. Beide Wendeschneidplatten 211a, 211c sind in die Zeichenebene projiziert, um die Überdeckung ihrer Schneidkanten 211A, 211C zu veranschaulichen. Die Benutzung jeweils lediglich nur einer Schneidkante jeder Schneidplatte wird durch einen Versatz V der Wendeschneidplatten gegeneinander erreicht. In der Projektion definieren beide Schneidkanten 211A, 211C eine Kontur, die ein einheitliches Untermaß U in Bezug auf eine endgültig gewünschte Form F der Hinterschneidung aufweist.

Die Verhältnisse sind für die Wendeschneidplatten 213a, 213c sowie für die Wendeschneidplatten 21'a, 21c entsprechend. Aufgrund der an jedem Stollen 16a, 16c jeweils abwechselnden Anordnung von aktiven Schneidkanten, d.h. die Schneidkante 211a ist nach unten orientiert, die nächste Schneidkante 213A nach oben und die nächstfolgende Schneidkante 21'A wieder nach unten, wird in jedem Stollen eine weitgehende Kompensation der Axialkomponenten der Schnittkräfte erreicht, was der Bearbeitungsgenauigkeit zugute kommt. Verallgemeinernd gilt für die Anordnung der Schneidkanten benachbarter Schneidplatten eines Stollens, daß sie miteinander einen Winkel einschließen, der radial nach innen oder nach außen geöffnet und dessen Winkelhalbierende im wesentlichen in Radialrichtung orientiert ist.

Die vorstehende Beschreibung gilt entsprechend für die Stollen 16b, 16d. Die Wendeschneidplatten 212b, 212d bilden ein Plattenpaar 212 zur Bearbeitung der vierten Hinterschneidung, wobei die Schneidkante 212B zum Nutboden und die Schneidkante 212D von dem Nutboden weg orientiert sind. Umgekehrt ist die Schneidkante 214B von dem Nutboden weg und die Schneidkante 214D zu dem Nutboden hin orientiert.

Bei der Bearbeitung bzw. Herstellung von bogenförmigen Nuten 3 in einem Turbinenrotor 2 kommt der vorstehend beschriebene.Glockensenker 11 folgendermaßen zur Anwendung:

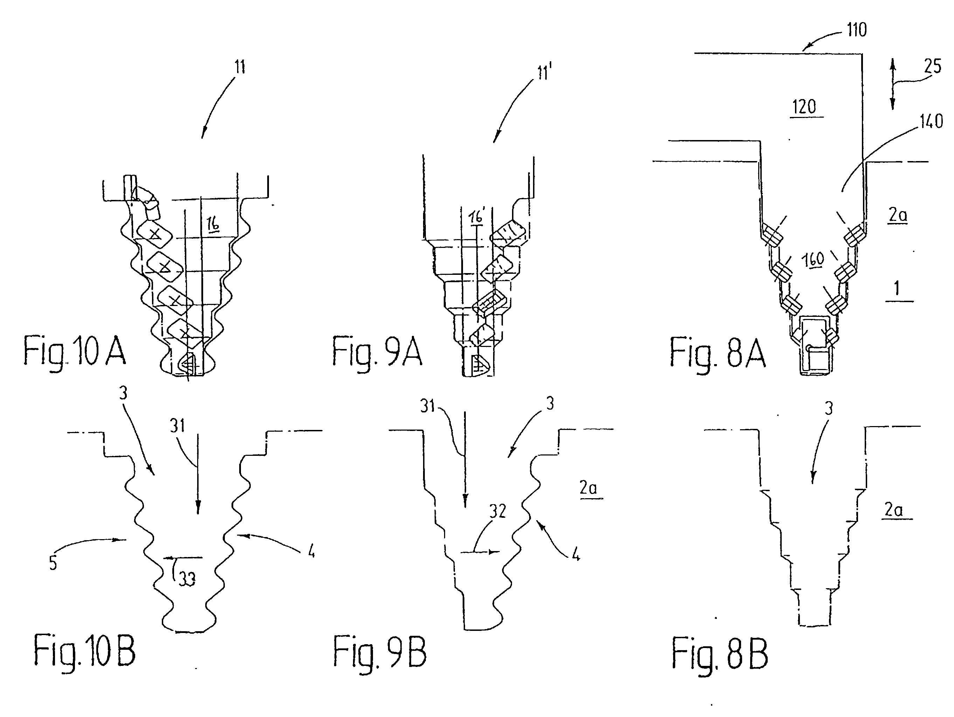

In einem ersten in den Fig. 8A, 8B veranschaulichten Arbeitsschritt wird ein in Fig. 8A schematisch veranschaulichter, an sich bekannter Glockenfräser 110 in der durch den Pfeil 25 angedeuteten Axialrichtung auf den Abschnitt 2a des Turbinenrotors 1 zu bewegt. Der um seine Drehachse 9 (Fig. 2) umlaufende Glockenfräser 110 weist bei seinem ringförmigen Trägerabschnitt 140 seines topfförmigen Werkzeugkörpers 120 sowohl an der Innenseite als auch an der Außenseite Wendeschneidplatten auf, die ein sich stufenweise verjüngendes Profil bestimmen. Nach einem etwa der Tiefe der gewünschten Nut 3 entsprechenden Axialvorschub ist die Nut 3 zunächst mit einer sich stufenweise verjüngenden hinterschneidungsfreien Kontur geöffnet, wie in Fig. 8B dargestellt ist.

Nachdem die Nut 3 in einem Schrupp-Fräsvorgang grob geöffnet ist, kommt der in Fig. 9A schematisiert veranschaulichte Glockensenker 11' zum Einsatz, indem dieser in einer Eintauchbewegung in die vorgeöffnete Nut 3 eingefahren wird. Seine Drehachse 9 (Fig. 2) ist dabei im wesentlichen um die Hinterschneidungstiefe gegen den Krümmungsmittelpunkt der zu erzeugenden bogenförmigen Nut 3 versetzt, so daß der Glockensenker 11' ohne Wand- oder Flankenberührung in die Nut 3 eintaucht. Die Eintauchbewegung ist in Fig. 9B mit einem Pfeil 31 angedeutet. Sie endet, sobald die aus Fig. 6E hervorgehende endständige Wendeschneidplatte 215 mit gewünschter Tiefe in den grob vorbearbeiteten Nutboden eingestochen ist.

Auf diese Bewegung folgt die Zustellbewegung, die in Fig. 9B durch einen Pfeil 32 veranschaulicht ist. Es kommen nun alle Wendeschneidplatten 21, 21', 21" (Fig. 5) mit der entsprechenden Flanke der Nut 3 in Eingriff, wobei in einer kurzen, der Hinterschneidungstiefe entsprechenden Vorschubbewegung die in Fig. 9B dargestellte Nutform mit der aus Fig. 7 hervorgehenden Genauigkeit ausgebildet wird. Die gesamte Flanke 4 wird mit allen Hinterschneidungen mit einem konstanten Untermaß bezüglich der gewünschten Nutweite ausgebildet. Hingegen können sowohl der Nutboden als auch der von den Wendeschneidplatten 21" auszubildende Nutrand bedarfsweise auf Maß in der gewünschten Oberflächengüte hergestellt werden. Nach Beendigung des Vorschubhubes stimmt die Drehachse 9 des Glockensenkers 11' mit dem Krümmungsmittelpunkt der zu erzeugenden Nut überein. Der Radius des Glockensenkers 11 bestimmt somit die Krümmung der Nut 3.

Die Vorschubbewegung ist sehr kurz und bei jeder Umdrehung des Glockensenkers 11 wird jede seiner Schneiden einmal über die gesamte Länge der Nut 3 geführt. Wegen der nur kurzen Vorschubbewegung und der gleichzeitigen Bearbeitung der gesamten Flanke 4 über die gesamte Nutlänge wird eine sehr kurze Bearbeitungszeit erreicht.

Zum Herausfahren des Glockensenkers 11' aus der Nut 3 wird dieser von der Flanke 4 radial weg bewegt, bis alle Wendeschneidplatten 21, 21', 21" aus den Hinterschneidungen der Flanke 4 herausgekommen sind. Danach wird der Glockensenker 11' axial aus der Nut 3 entfernt, ohne die Flanke 4 zu berühren.

Nach dem Herausfahren des Glockensenkers 11' aus der Nut 3, wird, wie aus den Fig. 10A, 10B hervorgeht, der Glockensenker 11 außermittig, d.h. ohne Berührung der Flanken 4, 5, in die Nut 3 eingefahren. Der nun folgende Senkvorgang infolge einer radialen Zustellbewegung in Richtung des Pfeiles 33, bei der die Drehachse 9 (Fig. 2) des Glockensenkers 11 parallel verschoben wird, gibt der Flanke 5 der Nut 3 die in Fig. 10B dargestellte Form. Hinsichtlich Bearbeitungszeit und -qualität gelten die obigen Ausführungen.

Die soweit vorbearbeitete Nut 3 wird in einem letzten Arbeitsschritt zur Fertigbearbeitung mit einem Formfräser bearbeitet, der, mit beiden Flanken 4, 5 zugleich in Eingriff stehend, längs durch die Nut 3 geführt wird. Aufgrund der lediglich geringen und gleichmäßig abzutragenden Materialstärke, die dem in Fig. 7 veranschaulichten Untermaß U entspricht, ist nur wenig Zerspanung erforderlich und es kann mit großem Vorschub gefahren werden, wobei der Formfräser lange maßhaltig bleibt.

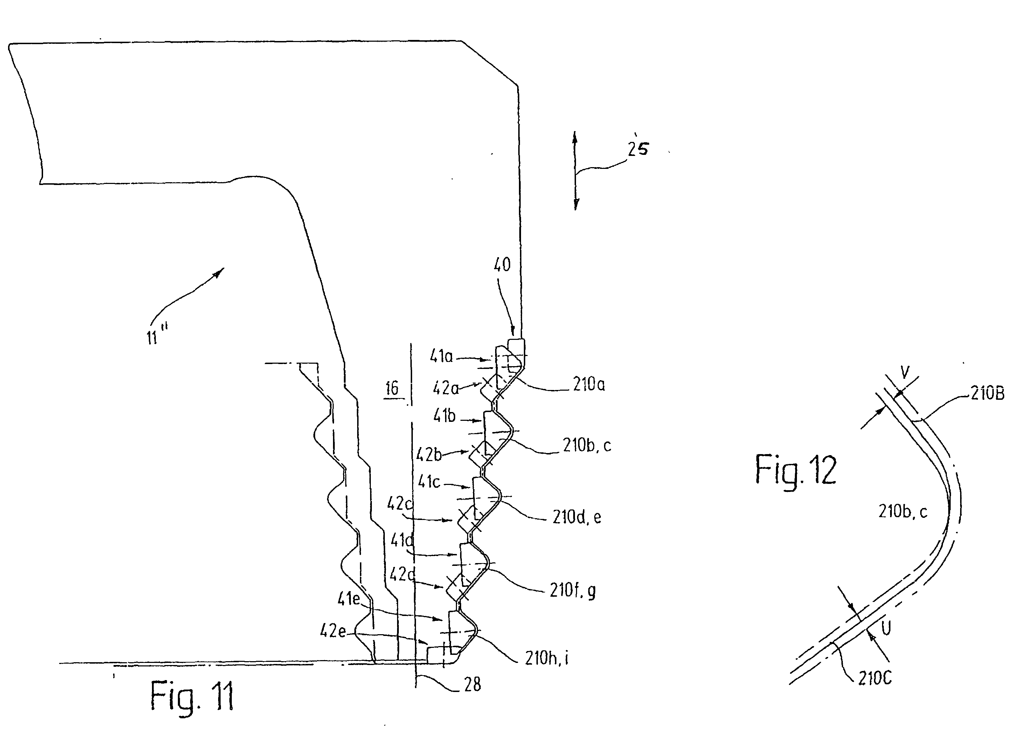

In Fig. 11 ist eine abgewandelte Ausführungsform eines Glockensenkers 11" veranschaulicht. Dieser unterscheidet sich von den vorstehend beschriebenen Glockensenkern 11', 11 lediglich durch die Ausbildung der Plattensitze und die Form der daran gehaltenen Wendeschneidplatten. Der Glockensenker 11" weist, wie der Glockensenker 11, einzelne Stollen 16 auf, die in Fig. 11 übereinander projiziert sind. Es gehören mehrere Stollen zu einer einzigen Schneide, wobei jeder Stollen ein bis zwei, maximal vier Wendeschneidplatten trägt. Im einzelnen sind die Plattensitze 40, 41, 42 (a bis e) zur tangentialen Anordnung der jeweiligen Schneidplatten vorgesehen. Sie weisen eine in Umfangsrichtung liegende Anlagefläche mit einer entsprechenden radial orientierten Auflagefläche zur Aufnahme der Schneidkräfte auf.

Die Hinterschneidungen werden mittels im Querschnitt der Form der jeweiligen Hinterschneidung entsprechenden Wendeschneidplatten 210 (a bis i) ausgebildet. Wie bereits bei den vorstehend beschriebenen Ausführungsbeispielen der Glockensenker 11, 11' sind die Wendeschneidplatten 210b bis 210i durch jeweils ein Wendeschneidplattenpaar gebildet, deren Schneidkanten gegeneinander in Axialrichtung (Pfeil 25) versetzt sind. Dies ist in der im wesentlichen der Fig. 7 entsprechenden Fig. 12 veranschaulicht, in der die Schneidkante 210B der Wendeschneidplatte 210b an der von dem Nutboden weg liegenden Seite und die Schneidkante 210C der Wendeschneidplatte 210c an der zu dem Boden hin liegenden Seite die jeweils andere Wendeschneidplatte überragt und somit aktiv ist. Hinsichtlich der Aufteilung der Wendeschneidplatten 210 auf unterschiedliche Stollen 16 und unterschiedliche Hinterschneidungen gelten die im Zusammenhang mit den Fig. 6A bis 6E getroffenen Ausführungen.

Insbesondere zur Herstellung von kreisbogenförmigen Rotornuten mit Tannenbaum-Querschnitt in Turbinenrotoren sind Glockensenker 11, 11', 11" vorgesehen, die nach Öffnen einer grob konturierten bogenförmigen Nut in diese eingetaucht und seitlich auf die Flanke der Nut hin zugestellt werden. Ein solcher Glockensenker weist einen topfförmigen Werkzeugkörper 12 auf, von dessen Boden 13 sich ein ringförmiger Trägerabschnitt 14 mit einzelnen Stollen 16 weg erstreckt. Die Stollen tragen an ihrer Innen- oder Außenseite Wendeschneidplatten, die in ihrer Überdeckung das Flankenprofil der Nut bestimmen. Solche Glockensenker ermöglichen eine Bearbeitung der kreisbogenförmigen Nuten in einer Bearbeitungszeit, die gegenüber der zur Bearbeitung mit herkömmlichen Formfräsern erforderlichen Zeit drastisch verkürzt ist.

## Patentansprüche

1. Glockensenker (11), insbesondere zur spanenden Bearbeitung bogenförmiger Nuten (3) in zumindest abschnittsweise zylindrischen Werkstücken (1),
mit einem Werkzeuggrundkörper (12), der einen ringförmigen, koaxial zu einer Drehachse (9) angeordneten Trägerabschnitt (14) aufweist,
mit an dem Trägerabschnitt (14) ausgebildeten Plattensitzen (19) und Befestigungsmitteln (24) zur Aufnahme und Halterung von Wendeschneidplatten (21, 21', 21"),
**dadurch gekennzeichnet, daß** die Wendeschneidplatten (21, 21', 21") bei einer Drehung des Werkzeuggrundkörpers (12) um die Drehachse (9) mit ihren aktiven Schneidkanten eine zu der Drehachse (9) koaxiale Umlauffigur definieren, die in Richtung der Drehachse (9) wenigstens eine Hinterschneidung aufweist.

2. Glockensenker nach Anspruch 1, **dadurch gekennzeichnet, daß** der ringförmige Trägerabschnitt (14) eine Folge voneinander beabstandeter Ausnehmungen (15) aufweist, zwischen denen Schneidplatten (21, 21', 21") tragende Stollen (16) ausgebildet sind.

3. Glockensenker nach Anspruch 1, **dadurch gekennzeichnet, daß** der ringförmige Trägerabschnitt (14) durch die Ausnehmungen (15) unterbrochen ist.

4. Glockensenker nach Anspruch 2, **dadurch gekennzeichnet, daß** die Stollen (16) und die Ausnehmungen (15) in ihrer Größe im wesentlichen übereinstimmen.

5. Glockensenker nach Anspruch 2, **dadurch gekennzeichnet, daß** die Plattensitze (19) an den Stollen (16) ausgebildet sind.

6. Glockensenker nach Anspruch 1, **dadurch gekennzeichnet, daß** an den Plattensitzen (19) bezüglich der Wendeschneidplatten (21, 21', 21") freiflächenseitig zugängliche Befestigungsmittel (24) angeordnet sind.

7. Glockensenker nach Anspruch 1, **dadurch gekennzeichnet, daß** die Schneidplatten (21, 21', 21") ausschließlich an der Außenumfangsseite des ringförmigen Trägerabschnittes (14) angeordnet sind.

8. Glockensenker nach Anspruch 1, **dadurch gekennzeichnet, daß** die Schneidplatten (21, 21', 21") ausschließlich an der Innenumfangsseite des ringförmigen Trägerabschnittes (14) angeordnet sind.

9. Glockensenkersatz zur spanenden Bearbeitung beidseitig hinterschnittener Nuten, bestehend aus einem Glokkensenker (11') nach Anspruch 8 und einem Glockensenker (11) nach Anspruch 7.

10. Glockensenker nach Anspruch 1, **dadurch gekennzeichnet, daß** die von den Schneidkanten der Wendeschneidplatten (21, 21', 21") definierte Umlauffigur eine in Axialrichtung gewellte Ringfläche ist.

11. Glockensenker nach Anspruch 1, **dadurch gekennzeichnet, daß** die Schneidplatten (21, 21', 21") an dem Trägerabschnitt (14) gruppenweise in sich jeweils quer zu der Umlaufrichtung erstreckenden Reihen angeordnet sind.

12. Glockensenker nach Anspruch 11, **dadurch gekennzeichnet, daß** wenigstens zwei der in einer Reihe angeordneten Wendeschneidplatten (21, 21', 21") einer Gruppe unterschiedlich orientierte aktive Schneidkanten aufweisen.

13. Glockensenker nach Anspruch 11, **dadurch gekennzeichnet, daß** zu der Gruppe in einer Reihe angeordneter Wendeschneidplatten (21, 21', 21") zwei Wendeschneidplatten (211a, 213a) gehören, deren Schneidkanten (211A, 213A) miteinander einen Winkel einschließen, dessen Winkelhalbierende im wesentlichen in Radialrichtung liegt.

14. Glockensenker nach Anspruch 11, **dadurch gekennzeichnet, daß** die Wendeschneidplatten (21, 21', 21") mehrerer hintereinanderliegender Reihen miteinander eine vollständige Schneide definieren.

15. Verfahren zur Ausbildung bogenförmiger hi.nterschnittener Nuten in der Mantelfläche wenigstens abschnittsweise zylindrischer Werkstücke, insbesondere zur Ausbildung von Rotornuten in Turbinenrotoren, wobei bei dem Verfahren:
in einem ersten Verfahrensschritt die Rotornut durch Zustellen eines ersten Glockenfräsers im wesentlichen in Richtung seiner Drehachse ohne Hinterschneidung geöffnet wird, **dadurch gekennzeichnet, daß**
in einem zweiten Verfahrensschritt an Seitenflanken der Rotornut durch axiales Eintauchen wenigstens eines entsprechend profilierten zweiten Glockensenkers und radiales Zustellen die erforderlichen Hinterschneidungen ausgebildet werden.

16. Verfahren nach Anspruch 15, **dadurch gekennzeichnet, daß** die Nutflanken in dem zweiten Verfahrensschritt nacheinander mit einem außen profilierten und mit einem innen profilierten Glockensenker bearbeitet werden.

17. Verfahren nach Anspruch 15, **dadurch gekennzeichnet, daß** an den Nutflanken mit: den Glockensenkern bis auf ein konstantes Aufmaß gearbeitet wird.

18. Verfahren nach Anspruch 15, **dadurch gekennzeichnet, daß** zur Fertigbearbeitung der Nut in einem dritten Arbeitsschritt ein entsprechend der Flankenform profilierter Schaftfräser in Längsrichtung der Nut geführt wird.

19. Verfahren nach Anspruch 18, **dadurch gekennzeichnet, daß** mit dem Schaftfräser die einander gegenüberliegenden Flanken der Nut beim Vorschub des Schaftfräsers entlang der Nut gleichzeitig bearbeitet werden.

20. Verfahren nach Anspruch 16, **dadurch gekennzeichnet, daß** die Glockensenker die Glockensenker (11, 11') nach Anspruch 7 und 8 sind.

## Claims

1. Bell-type core drill (11), in particular for machining arc-shaped grooves (3) in at least partially cylindrical work pieces (1),
with a base tool body (12), which has an annular support section (14) arranged coaxially to a rotational axis (9), with plate seats (19) and fastening means (24) formed on the support section (14) to receive and hold reversible cutting plates (21, 21', 21")
**characterised in that**
during a rotation of the base tool body (12) around the rotational axis (9), the reversible cutting plates (21, 21', 21") define with their active cutting edges a pattern of rotation coaxial to the rotational axis (9) which has at least one undercut in the direction of the rotational axis (9).

2. Bell-type core drill according to Claim 1, **characterised in that** the annular support section (14) has a succession of spaced recesses (15), between which supports (16) bearing cutting plates (21, 21', 21") are formed.

3. Bell-type core drill according to Claim 1, **characterised in that** the annular support section (14) is broken up by the recesses (15).

4. Bell-type core drill according to Claim 2, **characterised in that** the supports (16) and the recesses (15) are essentially of the same size.

5. Bell-type core drill according to Claim 2, **characterised in that** the plate seats (19) are formed on the supports (16).

6. Bell-type core drill according to Claim 1, **characterised in that** fastening means (24) which are accessible on the free surface side with respect to the reversible cutting plates (21, 21', 21") are disposed on the plate seats (19).

7. Bell-type core drill according to Claim 1, **characterised in that** the cutting plates (21, 21', 21") are disposed exclusively on the side of the annular support section (14) on the outer periphery.

8. Bell-type core drill according to Claim 1, **characterised in that** the cutting plates (21, 21', 21") are disposed exclusively on the side of the annular support section (14) on the inner periphery.

9. Bell-type core drill set for machining grooves with undercuts on both sides, comprising a bell-type core drill (11') according to Claim 8 and a bell-type core drill (11) according to Claim 7.

10. Bell-type core drill according to Claim 1, **characterised in that** the pattern of rotation defined by the cutting edges of the reversible cutting plates (21, 21', 21") is an annular surface corrugated in axial direction.

11. Bell-type core drill according to Claim 1, **characterised in that** the cutting plates (21, 21', 21") are arranged in groups on the support section (14) in rows extending respectively transversely to the direction of rotation.

12. Bell-type core drill according to Claim 11, **characterised in that** at least two of the reversible cutting plates (21, 21', 21") arranged in a row of one group have differently oriented active cutting edges.

13. Bell-type core drill according to Claim 11, **characterised in that** two reversible cutting plates (211a, 213a) belong to the group of reversible cutting plates (21, 21', 21") arranged in a row, their cutting edges (211A, 213A) enclosing an angle with one another, the bisecting line of which lies essentially in radial direction.

14. Bell-type core drill according to Claim 11, **characterised in that** the reversible cutting plates (21, 21', 21") of several rows lying one behind the other together define a complete cutter.

15. Process for forming arc-shaped undercut grooves in the shell surface of at least partially cylindrical work pieces, in particular for forming rotor grooves in turbine rotors, and in said process:
in a first process step the rotor groove is opened without an undercut by advancing a first bell-type core drill essentially in the direction of its rotational axis,
**characterised in that**
in a second process step the required undercuts are formed on side flanks of the rotor groove by axially inserting at least one appropriately profiled second bell-type core drill and advancing it radially.

16. Process according to Claim 15, **characterised in that** in the second process step the groove flanks are machined one after the other with an externally profiled and an internally profiled bell-type core drill.

17. Process according to Claim 15, **characterised in that** work on the groove flanks is carried out with the bell-type core drills to a constant excess dimension.

18. Process according to Claim 15, **characterised in that** for finishing the groove in a third work step an end mill profiled in accordance with the flank form is directed in the longitudinal direction of the groove.

19. Process according to Claim 18, **characterised in that** the opposing flanks of the groove are machined simultaneously with the end mill during the advance of the end mill along the groove.

20. Process according to Claim 16, **characterised in that** the bell-type core drills are the bell-type core drills (11, 11') according to Claim 7 and 8.

## Revendications

1. Mèche-fraise en forme de cloche, en particulier pour l'usinage par enlèvement de copeaux de rainures courbes (3) dans des pièces (1) au moins partiellement cylindriques,
avec un corps d'outil (12) principal, qui présente une partie de support (14) annulaire, disposée coaxialement par rapport à un axe de rotation (9), avec prévus sur la partie de support (14), des logements de plaquettes de coupe (19) et des moyens de fixation (24) pour recevoir et fixer des plaquettes de coupe amovibles (21, 21', 21"),
**caractérisée en ce que** les plaquettes de coupe amovibles (21, 21', 21"), lors d'une rotation du corps d'outil (12) principal autour de l'axe de rotation (9), définissent avec leurs arêtes de coupe actives une figure de révolution coaxiale avec l'axe de rotation (9) qui, dans la direction de l'axe de rotation (9), présente au moins une contre-dépouille.

2. Mèche-fraise en forme de cloche selon la revendication 1, **caractérisée en ce que** la partie de support (14) annulaire présente une suite d'évidements (15) espacés les uns des. autres entre lesquels sont aménagées des nervures (16) supportant les plaquettes de coupe amovibles (21, 21', 21").

3. Mèche-fraise en forme de cloche selon la revendication 1, **caractérisée en ce que** la partie de support (14) annulaire est divisée par les évidements (15).

4. Mèche-fraise en forme de cloche selon la revendication 2, **caractérisée en ce que** les nervures (16) et les évidements (15) présentent des dimensions essentiellement identiques.

5. Mèche-fraise en forme de cloche selon la revendication 2, **caractérisée en ce que** les logements de plaquettes de coupe (19) sont aménagés sur les nervures (16).

6. Mèche-fraise en forme de cloche selon la revendication 1, **caractérisée en ce que** des moyens de fixation (24) accessibles côté face dégagée par rapport aux plaquettes de coupe amovibles (21, 21', 21") sont disposés au niveau des logements de plaquettes de coupe (19).

7. Mèche-fraise en forme de cloche selon la revendication 1, **caractérisée en ce que** les plaquettes de coupe amovibles (21, 21', 21") sont disposées exclusivement sur la surface périphérique extérieure de la partie de support (14) annulaire.

8. Mèche-fraise en forme de cloche selon la revendication 1, **caractérisée en ce que** les plaquettes de coupe amovibles (21, 21', 21") sont disposées exclusivement sur la surface périphérique intérieure de la partie de support (14) annulaire.

9. Ensemble mèche-fraise en forme de cloche pour l'usinage par enlèvement de copeaux de rainures en contre-dépouille des deux côtés, comprenant une mêche-fraise en forme de cloche (11') selon la revendication 8 et une mêche-fraise en forme de cloche (11') selon la revendication 7.

10. Mèche-fraise en forme de cloche selon la revendication 1, **caractérisée en ce que** la figure de révolution définie par les arêtes de coupe des plaquettes de coupe amovibles (21, 21', 21") est une surface annulaire ondulée dans la direction axiale.

11. Mèche-fraise en forme de cloche selon la revendication 1, **caractérisée en ce que** les plaquettes de coupe amovibles (21, 21', 21") sont disposées par groupes sur la partie de support (14) en des rangées qui s'étendent chacune transversalement à la direction de rotation.

12. Mèche-fraise en forme de cloche selon la revendication 11, **caractérisée en ce qu'**au moins deux des plaquettes de coupe amovibles (21, 21', 21") d'un groupe disposées en une rangée, présentent des arêtes de coupe actives avec des orientations différentes.

13. Mèche-fraise en forme de cloche selon la revendication 11, **caractérisée en ce que** le groupe de plaquettes de coupe amovibles (21, 21', 21") disposées en une rangée comprend deux plaquettes de coupe (211a, 213a), dont les arêtes de coupe (211A, 213A) forment entre elles un angle dont la bissectrice s'étend essentiellement dans la direction radiale.

14. Mèche-fraise en forme de cloche selon la revendication 11, **caractérisée en ce que** les plaquettes de coupe amovibles (21, 21', 21") de plusieurs rangées consécutives définissent ensemble un taillant complet.

15. Procédé de façonnage de rainure courbes en contre-dépouille dans la surface extérieure d'une pièce au moins partiellement cylindrique, en particulier pour la réalisation de rainures de rotor dans des rotors de turbine, procédé dans lequel
au cours d'une première étape, on ouvre la rainure de rotor sans contre-dépouille en avançant une première mêche-fraise en forme de cloche essentiellement dans la direction de son axe de rotation,
**caractérisé en ce que**,
au cours d'une deuxième étape de procédé, on réalise les contre-dépouilles nécessaires dans les flancs de la rainure de rotor par plongée axiale et avance radiale d'au moins une deuxième mêche-fraise profilée.

16. Procédé selon la revendication 15, **caractérisé en ce qu'**au cours de la deuxième étape de procédé, on usine l'un après l'autre les flancs de la rainure à l'aide d'une mêche-fraise profilée à profil extérieur et d'une mêche-fraise profilée à profil intérieur.

17. Procédé selon la revendication 15, **caractérisé en ce qu'**on usine les flancs de rainure à l'aide des mêches-fraises jusqu'à l'obtention d'une surdimension constante.

18. Procédé selon la revendication 15, **caractérisé en ce que**, pour la finition de la rainure, au cours d'une troisième étape de procédé, on déplace une fraise deux tailles profilée, adaptée à la forme des flancs, dans la direction longitudinale de la rainure.

19. Procédé selon la revendication 18, **caractérisé en ce qu'**avec la fraise deux tailles, on usine simultanément les flancs mutuellement en vis-à-vis lors du déplacement de ladite fraise deux tailles le long de la rainure.

20. Procédé selon la revendication 16, **caractérisé en ce que** les mêches-fraises sont des mêches-fraises selon les revendications 7 et 8.
